# EUROPÄISCHE PATENTANMELDUNG

(11) **EP 1 729 034 A2**
(43) Veröffentlichungstag der Anmeldung: **06.12.2006**
(21) Anmeldenummer: 06010049.2
(22) Anmeldetag: 16.05.2006
(51) Int. Cl.: F16H 25/20, H02K 7/06

(54) **Aktuator**

(30) Priorität: 31.05.2005 DE 102005025383
(71) Anmelder: Wittenstein AG, 97999 Igersheim (DE)
(72) Erfinder: Mehring, Jörg-Peter, 97285 Tauberettersheim (DE); Eck, Alexander, 97957 Wittighausen (DE)
(74) Vertreter: Weiss, Peter

(57) **Zusammenfassung**

Bei einem Aktuator, bestehend aus einem elektrischen Antrieb (1) mit nachgeschaltetem Getriebe (2), insbesondere zum automatischen und elektrischen Verschliessen von Türen eines Fahrzeuges, insbesondere eines Flugzeuges, soll dem Aktuator (R) zumindest ein elektronisches Typenschild (4) zugeordnet sein.

## Beschreibung

Die vorliegende Erfindung betrifft einen Aktuator, bestehend aus einem elektrischen Antrieb mit nachgeschaltetem Getriebe, insbesondere zum automatischen und elektrischen Verschliessen von Türen eines Fahrzeuges, insbesondere eines Flugzeuges.

Derartige Aktuatoren sind vielfältiger Form und Ausführung im Stand der Technik bekannt und gebräuchlich. Dabei ist bekannt, dass alle Formen von Aktuatoren, Elektromotoren und Getrieben mit unterschiedlichsten Sensoren bestückt sind, die beispielsweise permanent im Betrieb die Leistungsdaten ermitteln und ausgeben können, wie beispielsweise Temperatur, Alterung, Drehzahl oder Drehmoment od. dgl..

Dies erfordert bei den herkömmlichen Aktuatoren einen hohen Regelaufwand, der teuer und aufwendig zu bewerkstelligen ist und zudem entsprechende Regelungs- und Steuerungseinrichtung erfordert, die insbesondere im Bereich der Luftfahrt auch durch ihr hohes Gewicht unerwünscht sind.

Zudem erfordern derartige Aktuatoren hohe komplexe Steuerungen, die teuer in der Entwicklung, im Betrieb und der Wartung sind.

Der vorliegenden Erfindung liegt die Aufgabe zuarunde, einen Aktuator der eingangs genannten Art zu schaffen, welcher die genannten Nachteile beseitigt, mit welchem auf sehr einfache und kostengünstige weise exakt und anwenderspezifisch ein gewünschter Aktuator ausgewählt werden kann.

Zur Lösung dieser Aufgabe führt, dass dem Aktuator zumindest ein elektronisches Typenschild zugeordnet ist.

Bei der vorliegenden Erfindung hat sich als besonders vorteilhaft erwiesen, dass nach einer Fertigstellung des Gerätes, insbesondere vor einem Einbau eines Aktuators, dessen Leistungsdaten exakt durch Versuch ermittelt werden, und für jeden Aktuator selbst seine aktuatorspezifischen Daten in einem elektronischen Typenschild in Form einer vereinfachten Form als Faktor, abgelegt werden. Dabei hat sich als vorteilhaft erwiesen, einen Faktor zu wählen, der ein Verhältnis von Drehmoment zu Strom und Nenndrehzahl bildet.

Auf diese Weise lässt sich aktuatorspezifisch für jeden einzelnen Aktuator selbst durch Versuch seine eigene tatsächliche Kennzahl ermitteln.

Selbst bei einer Serienfertigung von Aktuatoren ist dies für jeden einzelnen Aktuator erforderlich, da durch Fertigungstoleranzen, Lagerzeiten, etc. jeder auch in Serie hergestellte Aktuator differierende Kenndaten hinsichtlich Drehmoment, Stromaufnahme, Nenndrehzahl und somit Drehmomentkonstante etc. aufweist.

Zur Bestimmung und Regelung des Aktuators im Betrieb, betreffend eines Mindestdrehmomentes bzw. zur Begrenzung eines maximal zulässigen Drehmomentes ist daher die Kenntnis dieser Daten aktuatorspezifisch von grosser Bedeutung, da hierdurch jeder Aktuator selbst über seine eigene Kennzahl anwenderspezifisch eingesetzt und eingebaut werden kann und entsprechend seiner Kenndaten derart angesteuert bzw. geregelt werden kann, um ein exakt minimales Drehmoment zu erreichen und ein exakt maximales Drehmoment entsprechend abzuregeln bzw. nicht zu überschreiten.

Dabei kann das elektronische Typenschild als einlesbarer Chip od. dgl., durch die Steckerelemente auswertbar, drahtlos auswertbar od. dgl. im Steckerelement selbst im Aktuator, im Gehäuse des Aktuators im elektronischen Antrieb oder dem Getriebe zugeordnet oder integriert sein, hierauf sei die Erfindung nicht beschränkt.

Weitere Vorteile, Merkmale und Einzelheiten der Erfindung ergeben sich aus der nachfolgenden Beschreibung eines bevorzugten Ausführungsbeispieles sowie anhand der Zeichnungen, diese zeigen in
Figur 1 eine schematisch dargestellte perspektivische Seitenansicht auf einen Aktuator;
Figur 2 einen schematisch dargestellte perspektivische Rückansicht des Aktuators gemäss Figur 1;

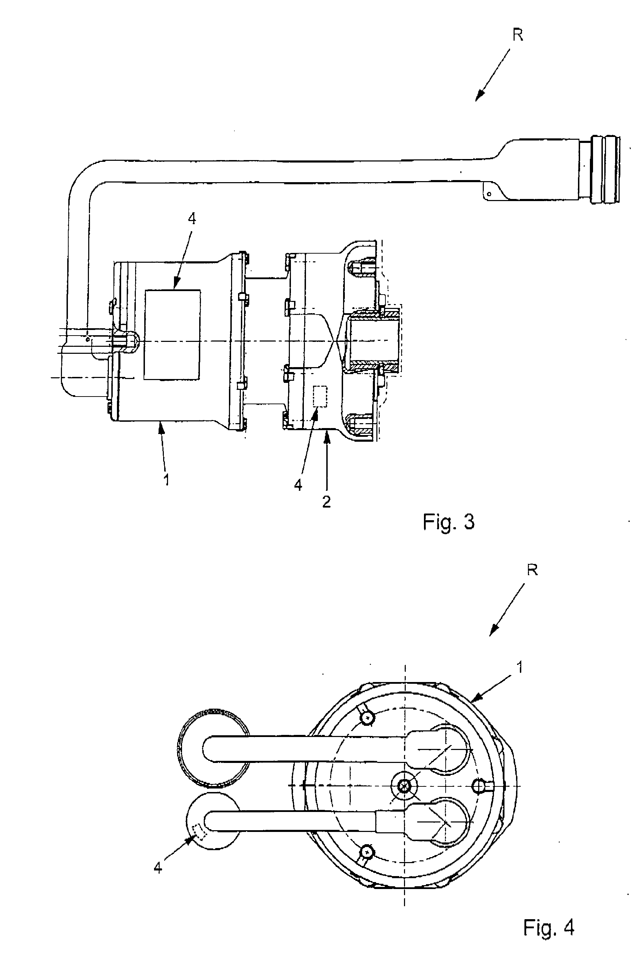

Figur 3 schematisch dargestellte Seitenansicht auf den Aktuator gemäss den Figuren 1 und 2;
Figur 4 eine schematisch dargestellte Rückansicht auf den Aktuator R gemäss Figur 1.

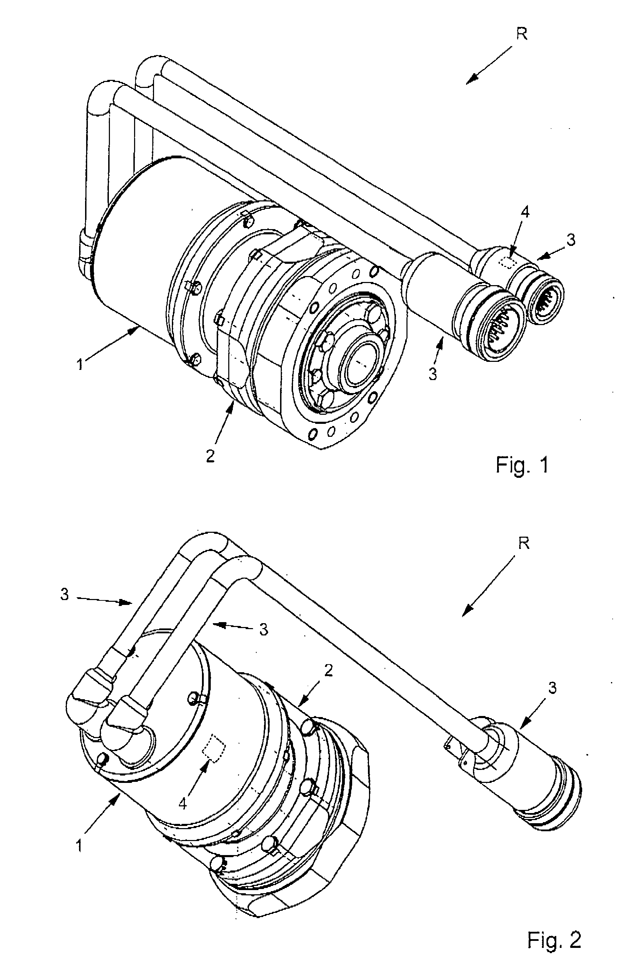

Gemäss Figur 1 weist ein Aktuator R einen elektrischen Antrieb 1 auf, welchem ein Getriebe 2 nachgeschaltet ist.

Zur Ansteuerung des elektrischen Antriebes 1 ragen vorzugsweise rückseitig in den elektrischen Antrieb 1 Steckerelemente 3 in den elektrischen Antrieb 1 ein.

Bei der vorliegenden Erfindung hat sich als besonders vorteilhaft erwiesen dem Aktuator R ein elektronisches Typenschild 4 zuzuordnen.

Dabei kann das elektronische Typenschild 4 in einem der beiden Steckerelemente 3 integriert sein, dem elektrischen Antrieb 1 und/oder dem Getriebe 2 zugeordnet bzw. angeschlossen sein.

Bevorzugt ist das elektronische Typenschild 4 in einem der beiden Stecker 3 integriert eingesetzt und dort auch über das Steckerelement 3 auswertbar bzw. einlesbar angeordnet.

Im elektronischen Typenschild 4 werden bei der vorliegenden Erfindung aktuatorspezifische Daten hinterlegt.

Es werden dort exakte Kenndaten des Aktuators R selbst dort im Typenschild 4 hinterlegt.

Dabei wird jedes einzelne Gerät bzw. jeder einzelne Aktuator R für sich selbst nach der Fertigung und vor einem Einbau getestet und diese entsprechend ermittelten Kenndaten des Aktuators R werden dort im aktuatoreigenen Typenschild 4 hinterlegt. Es hat sich als besonders vorteilhaft bei der vorliegenden Erfindung erwiesen im elektronischen Typenschild 4 die eigenen Kenndaten des Aktuators R selbst in Form eines sogenannten "KT"-Faktors zu hinterlegen, der gebildet wird aus einem Verhältnis des Drehmomentes zum Strom in Abhängigkeit der Drehzahl bzw. Nenndrehzahl des elektrischen Antriebes 1 und/oder des Getriebes 2.

Gegebenfalls kann noch Einfluss genommen werden auf eine Korrektur des "KT"-Faktors bzw. auf das Verhältnis von Drehmoment zu Strom in Abhängigkeit von der Drehzahl durch die Hinzunahme eines Korrekturfaktors durch beispielsweise die Temperatur. Dies soll ebenfalls im Rahmen der vorliegenden Erfindung liegen. In diesem Fall ist dem Getriebe 2 und/oder dem elektrischen Antrieb 1 ein zusätzlicher Temperatursensor zugeordnet, der die entsprechenden Daten hierfür liefert.

Wichtig ist jedoch bei der vorliegenden Erfindung, dass an jedem Aktuator R einzeln und selbst dessen eigene spezifische Kenndaten ganz exakt ermittelt werden, um einen exakten bestimmbarer Aktuator R hinsichtlich seiner Leistung zu erhalten. Dabei wird vor dem Einbau des Aktuators R für einen beliebigen Benutzer beispielsweise zum Öffnen und Schliessen von Türen im Luftfahrtbereich der Aktuator R getestet unter Last gestellt und die exakt daraus resultierenden gemessenen Kenndaten, lassen sich in Form des "KT"-Faktors aus dem Verhältnis-/ Drehmoment zu Strom in Abhängigkeit von Drehzahl, im elektronischen Typenschild 4 hinterlegen. Dadurch lässt sich sehr einfach, exakt und genau der Aktuator mit genau definierbaren Drehmomenten ansteuern.

Ferner ist ein Rückschluss auf Alterung, Verschleiss und insbesondere ein anwenderspezifischer Einsatz des Aktuators R an einen bestimmten Einsatzort, der beispielsweise sehr sensibel ein Mindestdrehmoment erfordert und ein maximales Drehmoment nicht überschreitet möglich. Dies ist beispielsweise im Luftfahrtbereich von besonderer Bedeutung, insbesondere zum elektrischen Öffnen und Schliessen von Türen, so dass bei Überschreiten eines maximal zulässigen Drehmomentes nicht eine Struktur des Flugzeuges, der Flugzeugtür oder dergleichen beschädigt wird.

### Bezugszeichenliste

| | | | | | |
|---|---|---|---|---|---|
| 1 | elektrischer Antrieb | 34 | | 67 | |
| 2 | Getriebe | 35 | | 68 | |
| 3 | Steckerelement | 36 | | 69 | |
| 4 | elektronisches Typenschild | 37 | | 70 | |
| 5 | | 38 | | 71 | |
| 6 | | 39 | | 72 | |
| 7 | | 40 | | 73 | |
| 8 | | 41 | | 74 | |
| 9 | | 42 | | 75 | |
| 10 | | 43 | | 76 | |
| 11 | | 44 | | 77 | |
| 12 | | 45 | | 78 | |
| 13 | | 46 | | 79 | |
| 14 | | 47 | | | |
| 15 | | 48 | | | |
| 16 | | 49 | | | |
| 17 | | 50 | | R | Aktuator |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Aktuator, bestehend aus einem elektrischen Antrieb (1) mit nachgeschaltetem Getriebe (2), insbesondere zum automatischen und elektrischen Verschliessen von Türen eines Fahrzeuges, insbesondere eines Flugzeuges,
**dadurch gekennzeichnet,**
**dass** dem Aktuator (R) zumindest ein elektronisches Typenschild (4) zugeordnet ist.

2. Aktuator nach Anspruch 1, **dadurch gekennzeichnet, dass** im elektronischen Typenschild (4) aktuatorspezifische Kenndaten abgelegt sind.

3. Aktuator nach Anspruch 1 oder 2, **dadurch gekennzeichnet, dass** im elektronischen Typenschild (4) die exakt ermittelten Kenndaten des Aktuators (R) selbst hinterlegt sind.

4. Aktuator nach wenigstens einem der Ansprüche 1 bis 3, **dadurch gekennzeichnet, dass** über entsprechende Versuche, sowie Messungen jedes einzelnen Aktuators (R) selbst die jeweiligen eigenen exakt ermittelten Kenndaten im elektronischen Typenschild (4) hinterlegt sind.

5. Aktuator nach wenigstens einem der Ansprüche 1 bis 4, **dadurch gekennzeichnet, dass** unmittelbar vor einem Einbau des Aktuators (R) die eigenen aktuatorspezifischen Kenndaten gemessen, ermittelt oder durch Versuche und Tests, Belastungstest ermittelt und dann im elektronischen Typenschild (4) aktuatorspezifisch für jeden eigenen Aktuator (R) selbst ablegbar sind.

6. Aktuator nach wenigstens einem der Ansprüche 1 bis 4, **dadurch gekennzeichnet, dass** im elektronischen Typenschild (4) Kennwerte, insbesondere Faktoren als "KT"-Faktoren hinterlegt sind, wobei ein Verhältnis des Drehmomentes in Abhängigkeit vom Strom und der Drehzahl als Faktor hinterlegbar ist.

7. Aktuator nach wenigstens einem der Ansprüche 1 bis 6, **dadurch gekennzeichnet, dass** als Faktor ein Verhältnis von Drehmomenten zum Strom in Abhängigkeit von der angelegten Drehzahl, aktuatorspezifisch bzw. gerätespezifisch jeweils individuell im elektronischen Typenschild (4) hinterlegt, und hierdurch anwenderspezifisch das Gerät über den exakt ermittelten Faktor exakt regelbar betreffend das im Aktuator (R) zu erzeugende Drehmoment einsetzbar ist.

8. Aktuator nach wenigstens einem der Ansprüche 1 bis 7, **dadurch gekennzeichnet, dass** das elektronische Typenschild (4) dem elektrischen Antrieb (1) und oder dem nachgeschalteten Getriebe (2) und/oder einem Steckerelement (3) zugeordnet oder dort integriert ist.

9. Aktuator nach wenigstens einem der Ansprüche 1 bis 8, **dadurch gekennzeichnet, dass** aus dem elektronischen Typenschild (4) lediglich der gerätespezifische eigene KT-Faktor, als Verhältnis zwischen Drehmoment und Strom in Abhängigkeit einer Drehzahl auslesbar ist und hierüber eine exakte Ansteuerung und Regelung des abgehenden Drehmomentes erfolgt.

10. Aktuator nach wenigstens einem der Ansprüche 6 bis 9, **dadurch gekennzeichnet, dass** nach Ermittlung eines aktuatorspezifischen eigenen Faktors anwenderspezifisch für eine bestimmte Anwendung ein Mindesterfordernis für eine Drehmoment sowie ein maximales zulässiges Drehmoment des Aktuators (R) im Betrieb exakt regelbar ist.
